# EUROPÄISCHE PATENTSCHRIFT

(11) **EP 1 266 682 B1**
(45) Veröffentlichungstag und Bekanntmachung des Hinweises auf die Patenterteilung: **28.01.2004**
(21) Anmeldenummer: 01127629.2
(22) Anmeldetag: 20.11.2001
(51) Int. Cl.: B01D 46/12

(54) **Kombinationsfilter-Anordnung**
Combination filter device
Dispositif à filtre combiné

(30) Priorität: 11.06.2001 DE 20109515 U; 14.08.2001 DE 20112986 U
(43) Veröffentlichungstag der Anmeldung: 18.12.2002
(73) Patentinhaber: Filtertek B.V., County of Limerick (IE)
(72) Erfinder: Hogan, Brendan, Raheen, Co. Limerick (IE); Myers, Jan Willem Marinus, 5913 TP Venlo (NL)
(74) Vertreter: Brose, D. Karl

(56) Entgegenhaltungen:
- US-A- 3 386 580
- US-A- 3 800 943
- US-A- 4 199 442
- US-A- 4 371 436

## Beschreibung

Die Erfindung betrifft eine Kombinationsfilter-Anordnung mit einer Anzahl von in Strömungsrichtung hintereinander und parallel zueinander angeordneten Filtersieben, wobei die Filtersiebe unter Bildung von Filterelementen in Gehäuseelementen gespannt befestigt sind, und die Gehäuseelemente mittels oberer und unterer Lagerflächen aneinander anliegend in einem Stapel zusammengehalten sind, und wobei die Filterelemente zylindrisch mit kreisförmigen Lagerflächen ausgebildet sind, sowie ein Verfahren zum Herstellen eines derartigen Filters.

Derartige Kombinationsfilter-Anordnungen sind allgemein bekannt und werden, abgesehen von vielen anderen Verwendungsmöglichkeiten, in der kosmetischen und pharmazeutischen Industrie überwiegend dadurch verwendet, um einen Schaum aus chemischen Flüssigkeiten zu erzeugen. Hierzu wird die chemische Flüssigkeit unter Druck eines inerten Gases oder Luft durch eine derartige Kombinationsfilter-Anordnung mit ausgesprochen feinen Filtersieben hindurchgedrückt, wobei üblicherweise zwei bis vier zueinander parallel liegende Siebe in dem Stapel zusammengefaßt sind. Der Innendurchmesser dieser Siebe liegt üblicherweise zwischen 6 und 10 mm und die Siebweite zwischen 50 und 40 Micron. Durch die Siebweite wird die Bläschengröße des zu erzeugenden Schaums bestimmt.

Eine durch Verwendung in der einschlägigen Industrie bekannte Kombinationsfilter-Anordnung der eingangs genannten Art besteht aus einem zylindrischen Gehäuse aus Kunststoff mit einem Eingangs- und einem Ausgangsabschnitt, in welche die zylindrischen Filterelemente als Stapel mit ihren kreisförmigen Lagerflächen aneinanderliegend eingeschoben sind. Bei dieser bekannten Konstruktion einer Kombinationsfilter-Anordnung der eingangs genannten Art besteht das Problem, daß sich zwischen den einzelnen Filtersieben Bypässe bilden können, an denen die chemische Flüssigkeit unter Umgehung der Filtersiebe vorbeigelangen kann, wodurch derartige Leckstellen dann umgesteuerte Größen der Schaumbläschen erzeugen, so daß eine ungleichmäßige Schaumqualität die Folge ist.

Der Erfindung liegt die Aufgabe zugrunde, eine Kombinationsfilter-Anordnung der eingangs genannten Art derart zu verbessern, daß trotz einfacher Herstellung die Möglichkeit ausgeschlossen wird, daß sich derartige Bypässe bilden können, sowie ein dazu geeignetes Herstellungsverfahren vorzuschlagen.

Bei einer Kombinationsfilter-Anordnung der oben definierten Art wird diese Aufgabe dadurch gelöst, daß jedes Filterelement auf seiner oberen bzw. unteren Lagerfläche eine zentrierende männliche Kupplungs- und Dichtformation und auf der gegenüberliegenden unteren bzw. oberen Lagerfläche eine entsprechende weibliche zentrierende Kupplungs- und Dichtformation aufweist.

Durch die Erfindung wird der Vorteil erzielt, daß einerseits die Filterelemente genau zueinander fluchtend durch die zentrierenden männlichen und weiblichen Kupplungs- und Dichtformationen im Sinne eines optimalen Strömungswegs gehalten werden und andererseits die einzelnen Filterelemente absolut dicht aneinander liegen, so daß die oben erwähnten Bypässe nicht auftreten können.

Eine besonders bevorzugte Ausführungsform nach der Erfindung ist dadurch gekennzeichnet, daß die männliche Kupplungs- und Dichtformation aus einem ringförmigen Vorsprung auf der oberen Lagerfläche und die weibliche Kupplungs- und Dichtformation aus einer entsprechenden ringförmigen Ausnehmung in der unteren Lagerfläche besteht. Hierdurch wird mit einfachsten Mitteln auch hinsichtlich der Formkosten für die Filterelemente die angestrebte Wirkung optimal erzielt.

Im einzelnen kann die Erfindung dadurch weitergebildet werden, daß der ringförmige Vorsprung und die ringförmige Ausnehmung jeweils einen V-förmigen Querschnitt aufweisen. Ein derartiger Querschnitt ist sowohl im Sinne der zentrierenden Wirkung als auch der Dichtigkeit von besonderem Vorteil.

Eine besonders bevorzugte Ausführungsform nach der Erfindung kann dadurch geschaffen werden, daß die obere Lagerfläche eine ringförmig abgesenkte Stufe aufweist, daß die untere Lagerfläche eine ringförmige, in die Stufe passende Nabe aufweist, wobei die Passung zwischen dem Außendurchmesser der Nabe und dem Innendurchmesser der Stufe ein leichter Preßsitz ist, daß die männliche Kupplungs- und Dichtformation auf der Oberseite der Stufe und die weibliche Kupplungs- und Dichtformation auf der entsprechenden Oberseite der Nabe angeordnet sind, und daß die Höhe der Nabe größer ist als die Strecke, um welche die Stufe in der oberen Lagerfläche abgesenkt ist. Hierdurch läßt sich bereits ohne ein Gehäuse eine zusammenhängende Einheit aus den Filterelementen zusammenstecken, wobei der ringförmige Vorsprung und die ringförmige Ausnehmung mit dem V-förmigen Querschnitt zusammen mit dem leichten Preßsitz bereits eine absolute Dichtigkeit an den Übergängen zwischen den einzelnen Filterelementen gewährleisten. Gleichzeitig wird durch die Position der Kupplungs- und Dichtformationen die erzielte Dichtigkeit zwischen den einzelnen Filterelementen nochmals verbessert. Außerdem ist es möglich, eine aus Filterelementen bestehende Säule oder Stapel unter axiale Vorspannung zu setzen, um hierdurch die Abdichtung nochmals zu verbessern.

Im einzelnen kann die Erfindung dadurch weitergebildet werden, daß das Filtersieb in dem dazugehörigen Gehäuselement über den ringförmigen Vorsprung gelegt ist und teilweise die die Stufe umgebende zylindrische Wandung bedeckt. Hierdurch wird erreicht, daß die Filtersiebe besonders sicher in ihren Gehäuseelementen durch das zusätzliche Einklemmen gehalten werden.

Obwohl die Anzahl der Filterelemente in einer derartigen erfindungsgemäßen Kombinationsfilter-Anordnung an sich unbegrenzt ist, ist es aus praktischen Gründen bevorzugt, daß die Kombinationsfilter-Anordnung zwei bis fünf Filterelemente enthält.

Ferner ist es bevorzugt, daß die Filterelemente als koaxiale Säule in einem Gehäuse angeordnet sind, daß die Filterelemente unter axialer Vorspannung in dem Gehäuse gehalten sind, daß das Gehäuse aus einem Eingangsteil und einem Ausgangsteil besteht, welche axial zusammenfügbar sind, und daß der Eingangsteil mit einer weiblichen Kupplungs- und Dichtformation versehen ist, während der Ausgangsteil mit einer männlichen Kupplungs- und Dichtformation versehen ist. Hierdurch wird der Vorteil erzielt, daß der Eingangs- und Ausgangsteil jeweils den spezifischen Wünschen des Abnehmers und letztlichen Verwenders einer derartigen Kombinationsfilter-Anordnung angepaßt werden kann, ohne daß die Grundkonstruktion der Filterelemente selbst geändert werden muß, wobei gleichzeitig gewährleistet ist, daß auch am Eingangsteil oder am Ausgangsteil keinerlei Undichtigkeiten bestehen.

Bei einer bevorzugten Ausführungsform nach der Erfindung ist der Eingangsteil unter Vorspannung der Säule aus Filterelementen mit dem Ausgangsteil durch Ultraschallschweißen oder Kleben verbunden ist. Dies stellt eine besonders einfache Art der Herstellung dar, da lediglich vor dem Ultraschallschweißen die absolut zentrierte und aufeinander gestapelte Säule aus Dichtelementen unter eine geringe Vorspannung gebracht werden muß, welche dann nach dem Ultraschallschweißen erhalten bleibt.

Bei einer besonders bevorzugten abgewandelten Ausführungsform nach der Erfindung ist es auch möglich, daß der Eingangsteil unter Vorspannung der Säule aus Filterelementen mit dem Ausgangsteil durch einen durch Umspritzen der beiden Teile hergestellten Zylinderabschnitt verbunden ist. Hierbei wird dann lediglich die durch die zentrierenden Kupplungs- und Dichtformationen ausgerichtete Säule aus Filterelementen zwischen dem Ausgangsteil und dem Eingangsteil unter Vorspannung gebracht, während die Einheit dann umspritzt wird, um so den Zylinderabschnitt herzustellen, welcher den Eingangsteil mit dem Ausgangsteil verbindet und die Säule aus Filterelementen einschließt.

Hierbei ist es mit Vorteil möglich, den Zylinderabschnitt aus einem Kunststoff herzustellen, welcher zur Herstellung der Vorspannung nach dem Umspritzen schrumpft. Dies hat den möglichen Vorteil, daß die Säule aus Filterelementen nicht während des Umspritzens zwischen dem Eingangsteil und dem Ausgangsteil unter Vorspannung gebracht werden muß.

Die Technologie des Umspritzens kann darüber hinaus in vorteilhafter Weise nutzbar gemacht werden, die absolute Dichtigkeit noch zu verbessern, indem die Wandstärke der Gehäuseelemente derart gewählt wird, daß deren Material beim Umspritzen mit dem Material des Zylinderabschnitts verschmilzt.

Entsprechend dem gewünschten Einsatzgebiet kann bevorzugt das Eingangsteil als weiblicher Luer-Lock-Anschluß und das Ausgangsteil als männlicher Luer-Lock-Anschluß ausgebildet sein.

Weiterer Gegenstand der Erfindung ist ein Verfahren zur Herstellung einer Kombinationsfilter-Anordnung der oben beschriebenen Art, bei welchem eine Anzahl von Filtersieben unter Bildung von Filterelementen in Gehäuseelementen gespannt befestigt werden, und die Filtersiebe in Strömungsrichtung hintereinander und parallel zueinander angeordnet werden und die Gehäuseelemente an oberen und unteren Lagerflächen aneinander anliegend als Stapel in einem Gehäuse angeordnet werden.

Bei einem derartigen Verfahren wird die der Erfindung zugrundeliegende Aufgabe dadurch gelöst, daß jedes Filterelement auf einer seiner Lagerflächen mit einer zentrierenden männlichen Kupplungs- und Dichtformation und auf seiner gegenüberliegenden Lagerfläche mit einer zentrierenden weiblichen Kupplungs- und Dichtformation versehen wird, daß die Filterelemente mit ineinander eingreifenden männlichen und weiblichen Dichtformationen zu einer Säule gestapelt zwischen einem Eingangs- und Ausgangsteil angeordnet und axial zusammengedrückt werden, und daß in diesem Zustand der Eingangsteil mit dem Ausgangsteil verbunden wird.

Im einzelnen kann dies dadurch geschehen, daß der Eingangsteil mit dem Ausgangsteil über einen Gehäuseabschnitt durch Ultraschallschweissen oder Kleben verbunden wird.

Bei einer bevorzugten Ausführungsform nach der Erfindung wird der Eingangsteil mit dem Ausgangsteil durch Umspritzen verbunden.

Hierbei ist es besonders bevorzugt, daß die Säule von Filterelementen zwischen dem Eingangsteil und dem Ausgangsteil unter Vorspannung angeordnet wird, daß der Eingangsteil mit dem Ausgangsteil über einen durch Umspritzen geformten Zylinderabschnitt verbunden wird, und daß die Wandstärken und/oder die Spritztemperatur derart gewählt werden, daß das Material des Zylinderabschnitts mit dem Material der Filterelemente bzw. deren Gehäuseelemente verschmilzt.

Im folgenden wird die Erfindung anhand von in den Zeichnungen beispielhaft veranschaulichten Ausführungsformen näher erläutert. Es zeigt:
**FIGUR 1** eine Stirnansicht eines der Filterelemente der Kombinationsfilter-Anordnung nach der Erfindung;
**FIGUR 2** eine Schnittansicht längs der Linie II-II des Filterelements gemäß Figur 1;
**FIGUR 3** eine Schnittdarstellung im vergrößerten Maßstab, welche zwei zusammengefügte Filterelemente gemäß den Figuren 1 und 2 zur Bildung einer Kombinationsfilter-Anordnung zeigt;
**FIGUR 4** eine Schnittansicht eines geeigneten Eingangsteils für eine Kombinationsfilter-Anordnung nach der Erfindung;
**FIGUR 5** eine gegenüber Figur 4 vergrößerte Schnittansicht eines für eine Kombinationsfilter-Anordnung nach der Erfindung geeigneten Ausgangsteils;
**FIGUR 6** eine Schnittansicht einer ersten Ausführungsform einer Kombinationsfilter-Anordnung nach der Erfindung;
**FIGUR 7** eine Figur 6 entsprechende Schnittdarstellung einer zweiten Ausführungsform einer Kombinationsfilter-Anordnung nach der Erfindung, und
**FIGUR 8** eine Schnittdarstellung einer Einzelheit, welche eine eine Abwandlung der Ausführungsform gemäß Figur 7 veranschaulicht.

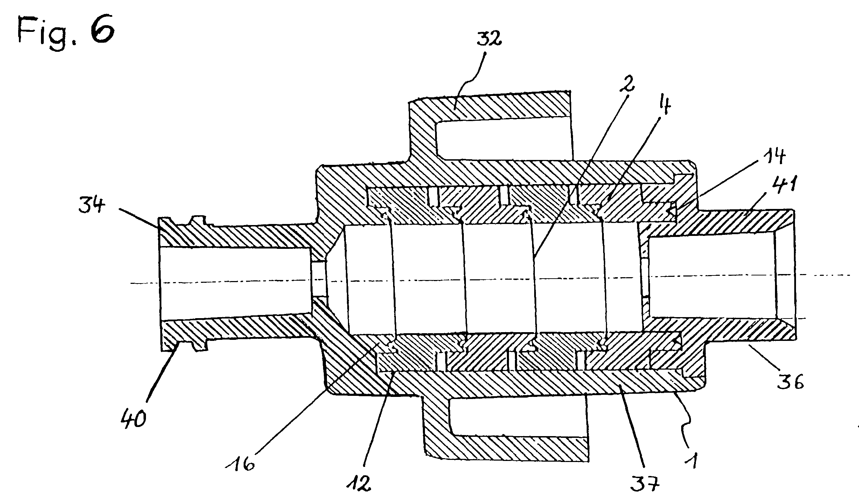

Zur Erläuterung der Erfindung wird zunächst einleitend auf die Ausführungsform nach der Schnittdarstellung gemäß Figur 6 bezug genommen.

Wie gezeigt, besteht eine erfindungsgemäße Kombinationsfilter-Anordnung 1 aus einer Anzahl in Strömungsrichtung hintereinander und parallel zueinander angeordneten Filtersieben 2. Die Filtersiebe 2 bilden jeweils Filterelemente 4, indem sie in Gehäuseelementen 6 gespannt befestigt sind. Die Gehäuseelemente 6 sind mittels oberer und unterer Lagerflächen 8 und 10 aneinander anliegend zu einem Stapel zusammengehalten. Wie gezeigt, sind die Filterelemente 4 allgemein zylindrisch ausgebildet, so daß die Lagerflächen 8 und 10 kreisringförmig sind.

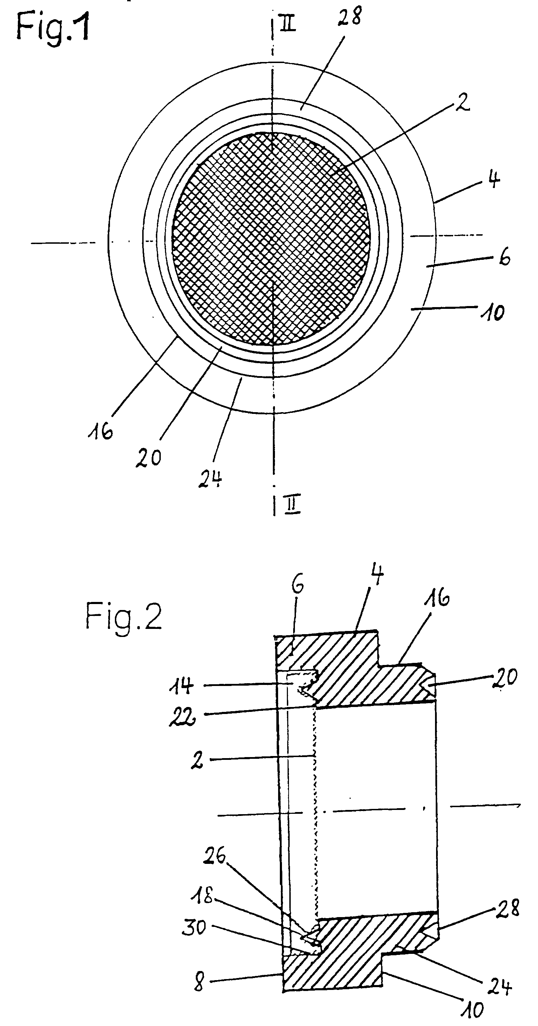

Ein wesentlicher Gesichtspunkt der Erfindung besteht in der Gestaltung der Filterelemente 4, wozu auf die Figuren 1 bis 3 bezug genommen wird.

Wie gezeigt, weist erfindungsgemäß jedes Filterelement 4 auf einer seiner Lagerflächen 8 oder 10, beim Ausführungsbeispiel auf der oberen Lagerfläche 8 eine zentrierende männliche Kupplungs- und Dichtformation 14 auf, während auf der gegenüberliegenden Lagerfläche 10 bzw. 8 beim Ausführungsbeispiel der unteren Lagerfläche 10 eine entsprechende weibliche zentrierende Kupplungs- und Dichtformation 16 ausgebildet ist.

Wie insbesondere aus den Figuren 1 und 2 ersichtlich, ist die männliche Kupplungs- und Dichtformation 14, welche gleichzeitig zentrierende Aufgaben hat, durch einen ringförmigen Vorsprung 18 auf der oberen Lagerfläche 8 gebildet. Die dazu passende weibliche Kupplungs- und Dichtformation 16 besteht aus einer entsprechend gestalteten ringförmigen Ausnehmung 20 in der unteren Lagerfläche 10.

Obwohl grundsätzlich auch andere Querschnittsformen den angestrebten Zweck erfüllen können, sind beim Ausführungsbeispiel der ringförmige Vorsprung 18 und die ringförmige Ausnehmung 20 beide mit einem verständlicherweise ineinander passenden V-förmigen Querschnitt ausgebildet, da diese Querschnittsform die gleichzeitige Funktion der Zentrierung der Filterelemente 4 zueinander optimal unterstützt.

Wie ferner aus Figur 1 und 2 ersichtlich, weist die obere Lagerfläche 8 eine ringförmig abgesenkte Stufe 22 auf, während die untere Lagerfläche 10 eine ringförmige, in die Stufe 22 hinein passende Nabe 24 aufweist.

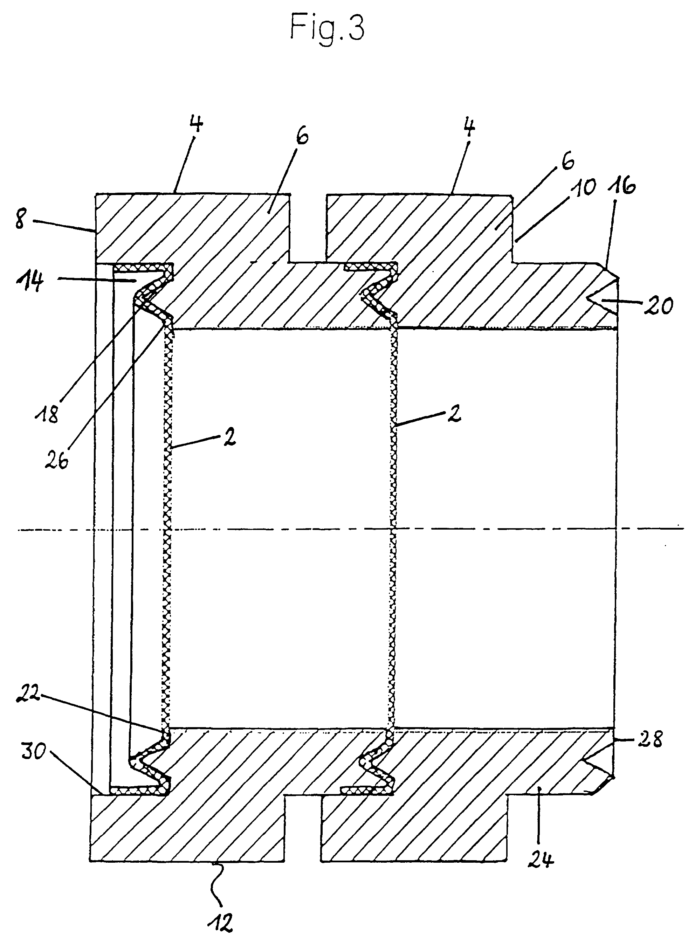

In der vergrößerten Schnittdarstellung gemäß Figur 3 sind zwei Filterelemente zu einer Kombinationsfilter-Anordnung miteinander verbunden dargestellt, wobei der kleinste Außendurchmesser der Nabe 24 und der Innendurchmesser der Stufe 22 derart bemessen sind, daß in der in Figur 3 dargestellten Anordnung die Passung zwischen dem Außendurchmesser der Nabe 24 und dem Innendurchmesser der Stufe 22 ein leichter Preßsitz ist. Der ringförmige Vorsprung 18 mit V-förmigem Querschnitt und die ringförmige Ausnehmung 20 mit ebenfalls V-förmigem Querschnitt passen dicht ineinander ein und der leichte Preßsitz zwischen dem Außendurchmesser der Nabe 24 und dem Innendurchmesser der Stufe 22 bilden einen derart eingegrenzten Strömungspfad, daß der durch die Filterelemente 4 gebildete Stapel 12 keinerlei Bypass erlaubt.

Wie gezeigt, ist zweckdienlicherweise der ringförmige Vorsprung 18 auf der Oberseite 26 der Stufe 22 angeordnet, während die ringförmige Ausnehmung 20 auf der im Stapel 12 gegen-überliegenden Oberseite 28 der Nabe 24 angeordnet ist.

Um ein enges Zusammendrücken der Filterelemente 4 zu ermöglichen, d.h. um in dem Stapel 12 eine gewisse Vorspannung in axialer Richtung zu erzeugen, ist die Höhe der Nabe 24 größer als die Strecke, um welche die Stufe 22 in der oberen Lagerfläche 8 abgesenkt ist.

Wie ferner aus den Figuren 1 bis 3 ersichtlich, ist das Filtersieb 2 in jedem dazugehörigen Gehäuseelement 6 über den ringförmigen Vorsprung 18 gelegt und bedeckt teilweise die die Stufe 22 umgebende zylindrische Wandung 30. Hierdurch werden die Filtersiebe 2 beim Zusammenfügen des Stapels 12 zusätzlich durch das Einklemmen zwischen dem ringförmigen Vorsprung 18 und der ringförmigen Ausnehmung 20 sowie zwischen der Nabe 24 und der Wandung 30 der Stufe 22 gesichert.

Obwohl, wie erwähnt, die Anzahl der Filterelemente 4 in dem Stapel 12 frei gewählt werden kann und praktisch unbegrenzt ist, werden für die eingangs geschilderten Zwecke zwei bis fünf Filterelemente 4 in einer derartigen Kombinationsfilter-Anordnung für ausreichend gehalten.

Wie aus der prinzipiellen Darstellung gemäß Figur 6 ersichtlich, werden die Filterelemente 4 als koaxiale Säule in einem Gehäuse 32 angeordnet, welches wegen der hervorragenden Abdichtung zwischen den einzelnen Filterelementen im Grunde genommen keine Dichtfunktion übernehmen muß. Die Abmessungen sind hierbei derart getroffen, daß die Filterelemente 4 unter axialer Vorspannung in dem Gehäuse 32 angeordnet werden, um die optimale Dichtung zwischen den einzelnen Filterelementen 4 herzustellen.

Ein besonderes Merkmal der vorliegenden Erfindung besteht jedoch auch in der speziellen Gestaltung des Gehäuses 32, welches bei sämtlichen Ausführungsformen zumindest einen Eingangsteil 34 und einen Ausgangsteil 36 aufweist, die axial in Richtung der Mittelachse des Stapels 12 zusammenfügbar sind.

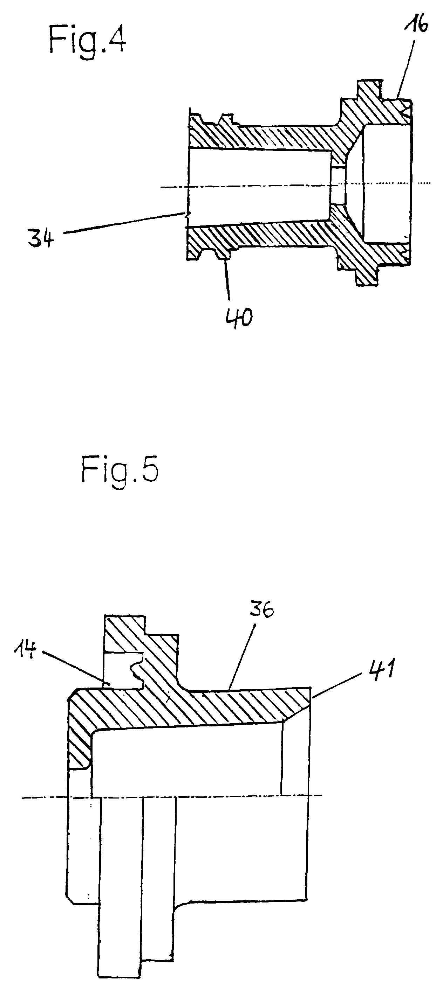

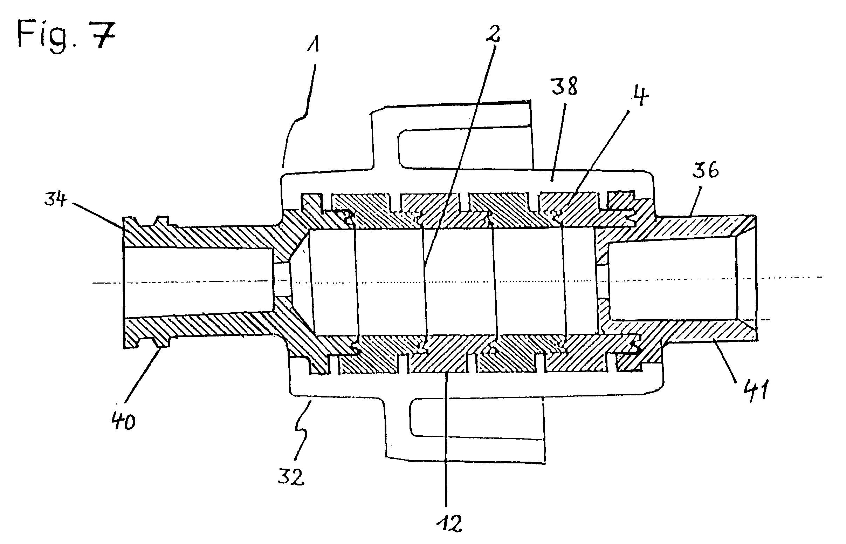

In Figur 4 ist ein derartiger Eingangsteil 34 im Schnitt dargestellt und Figur 5 zeigt in gegenüber Figur 4 vergrößertem Maßstab den dazugehörigen Ausgangsteil 36. Die in den Figuren 4 und 5 dargestellte Ausführungsform findet bei der Ausführungsform der Kombinationsfilter-Anordnung gemäß Figur 7 Verwendung, wie dies weiter unten noch näher erläutert wird.

Grundsätzlich jedoch weist jeweils der Eingangsteil 34 eine weibliche Kupplungs- und Dichtformation 16 der oben beschriebenen Art auf, während der Ausgangsteil 36 mit einer entsprechenden Kupplungs- und Dichtformation 14 versehen ist, so daß sich der Eingangsteil 34 und der Ausgangsteil 36 in gleichermaßen abdichtender Weise an die beiden Enden eines Stapels 12 aus Filterelementen 4 anfügen läßt.

Bei der Ausführungsform der Kombinationsfilter-Anordnung 1, wie sie in Figur 6 dargestellt ist, weist der Eingangsteil 34 eine einstückig ausgebildete Ringschürze 37 auf, welche den aus Filterelementen 4 bestehenden Stapel 12 vollständig aufnimmt. Die an dem Eingangsteil vorgesehene weibliche Kupplungs- und Dichtformation 16 greift hierbei in dichtender Weise in die männliche Kupplungs- und Dichtformation 18 des ersten Filterelementes 4 ein.

Am gegenüberliegenden Ende des Stapels 12 ist der Ausgangsteil 36 in die Ringschürze 37 eingeschoben und greift mit seiner männlichen Kupplungs- und Dichtformation in die weibliche Kupplungs- und Dichtformation des letzten Filterelementes 4 des Stapels ein.

Zur Fertigstellung der Kombinationsfilter-Anordnung gemäß Figur 6 werden der Eingangsteil 34 und der Ausgangsteil 36 zur Erzeugung einer Vorspannung in dem Stapel 12 aus Filterelementen 4 axial zusammengedrückt und anschließend unter Aufrechterhaltung des axialen Drucks durch Ultraschallschweißen oder Kleben miteinander verbunden. An dieser Stelle soll der Vollständigkeit halber erwähnt werden, daß sämtliche Einzelteile der Kombinationsfilter-Anordnung 1 aus geeigneten Kunststoffen bestehen.

Die in Figur 7 dargestellte Ausführungsform der Kombinationsfilter-Anordnung 1 nach der Erfindung unterscheidet sich von der Ausführungsform gemäß Figur 6 dadurch, daß bei dieser Ausführungsform das Gehäuse 32 durch Umspritzen hergestellt wird. Wegen der zentrierenden und dichtenden Wirkung ist es möglich, den Stapel 12 aus Filterelementen 4 zwischen dem Eingangsteil 34 gemäß Figur 4 und dem Ausgangsteil 36 gemäß Figur 6 anzuordnen und die dadurch gebildete Einheit mit einer axialen Vorspannung zu belasten, wonach die Säule aus den Filterelementen 4 mit dem Ausgangsteil 36 und dem Eingangsteil 34 durch einen Zylinderabschnitt 38 verbunden werden, welcher durch Umspritzen dieser Teile hergestellt wird. Das Umspritzen kann hierbei mit dem gleichen Kunststoff geschehen, aus welchem die Filterelemente 4 bestehen oder mit einem abweichenden andersartigen Kunststoff. Gleichzeitig ist es auch möglich, für den Zylinderabschnitt 38 einen Kunststoff zu verwenden, welcher nach dem Umspritzen geringfügig schrumpft und so die Vorspannung in dem Stapel 12 aus Filterelementen herstellt und aufrechterhält.

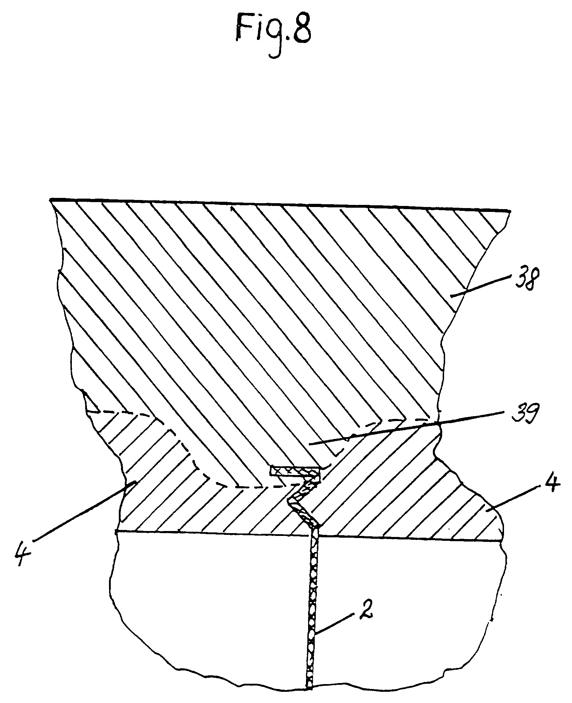

Das Umspritzen des Eingangsteils 34 des Stapels 12 und des Ausgangsteils 36 kann auch derart gesteuert werden, daß das Material der Gehäuseelemente 6 teilweise mit dem Material des Zylinderabschnitts verschmilzt und somit eine untrennbare und absolut dichte Einheit hergestellt wird. Zu diesem Zweck kann beispielsweise die Wandstärke der Gehäuseelemente 6 derart gewählt werden, daß wegen der geringeren vorhandenen Materialmenge im Vergleich zur Materialmenge des Zylinderabschnitts 38 die Fugen zwischen den Filterelementen 4 in einer Schmelz-Zone 39 miteinander verschmolzen werden. Dies ist in der Detailansicht gemäß Figur 8 schematisch dargestellt, aus welcher ersichtlich ist, daß nach dem Umspritzen zumindest die Stufe 22 und die Nabe 24 teilweise miteinander verschmolzen sind.

Allgemein können die Filterelemente 4 eines Stapels 12 bei einer Kombinationsfilter-Anordnung 1 nach der Erfindung sämtlich die gleiche Siebweite aufweisen.

Abweichend hierzu ist es auch möglich, daß die Filterelemente 4 eines Stapels 12 der Kombinationsfilter-Anordnung 1 unterschiedliche Siebweiten aufweisen, so daß hierdurch ein Tiefenfilter gebildet wird.

Der Vollständigkeit halber wird noch darauf hingewiesen, daß, obwohl entsprechend der beabsichtigten Verwendung viele verschiedene Ausgestaltungen möglich sind, bei den veranschaulichten Ausführungsbeispielen das Eingangsteil 34 als weiblicher Luer-Lock-Anschluß 40 und das Ausgangsteil 36 als männlicher Luer-Lock-Anschluß 41 ausgebildet sind.

Wie bereits oben angedeutet, wird die Kombinationsfilter-Anordnung 1 bevorzugt dadurch hergestellt, daß zunächst die Filterelemente 4 in einem separaten Arbeitsgang hergestellt werden, indem die Filtersiebe 2 mit den Gehäuseelementen 6 bevorzugt durch Spritzgiessen hergestellt werden. Hierdurch werden gleichzeitig an jedem Filterelement 4 auf den oberen Lagerflächen 8 und den unteren Lagerflächen 10 die männlichen Kupplungs- und Dichtformationen 14 und die weiblichen Kupplungs- und Dichtformationen 16 ausgebildet. Anschließend wird die gewünschte oder erforderliche Anzahl von Filterelementen 4 in einem Stapel 12 zusammengefaßt, wobei die männlichen Kupplungs- und Dichtformationen 14 und die weiblichen Kupplungs- und Dichtformationen 16 auf den einander gegenüberliegenden Lagerflächen 8 und 10 ineinander eingreifen. Die dadurch hergestellte Säule wird zwischen dem Eingangsteil 34 und dem Ausgangsteil 36 angeordnet und axial zusammengedrückt. In diesem Zustand wird der Eingangsteil 34 mit dem Ausgangsteil 36 verbunden.

Für die Verbindung des Eingangsteils 34 mit dem Ausgangsteil 36 mit dem dazwischen angeordneten Stapel 12 aus Filterelementen 4 stehen verschiedene Möglichkeiten zur Verfügung. Bei einer Alternative wird ein Gehäuseabschnitt verwendet, welcher durch Ultraschallschweissen oder Kleben mit dem Eingangsteil 34 bzw. dem Ausgangsteil 36 verbunden wird.

Bei der Alternative der Herstellung wird wiederum der Stapel 12 aus Filterelementen 4 zwischen dem Eingangsteil 34 und dem Ausgangsteil 36 unter Vorspannung angeordnet und die so geschaffene Einheit in einer Spritzgießform angeordnet. Anschließend wird der Eingangsteil 34 mit dem Ausgangsteil 36 unter Beibehaltung der Vorspannung durch einen durch Umspritzen hergestellten Zylinderabschnitt 38 verbunden. Bei diesem Vorgang werden die Wandstärken und/oder die Spritztemperatur derart gewählt, daß das Material des Zylinderabschnitts 38 in einer Schmelzzone 39 mit dem Material der Filterelemente 4 bzw. deren Gehäuseelemente 6 verschmilzt.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

### BEZUGSZEICHENLISTE

- 1 =: Kombinationsfilter-Anordnung
- 2 =: Filtersieb
- 4 =: Filterelement
- 6 =: Gehäuseelement
- 8 =: obere Lagerfläche
- 10 =: untere Lagerfläche
- 12 =: Stapel
- 14 =: männliche Kupplungs- und Dichtformation
- 16 =: weibliche Kupplungs- und Dichtformation
- 18 =: ringförmiger Vorsprung
- 20 =: ringförmige Ausnehmung
- 22 =: abgesenkte Stufe
- 24 =: Nabe
- 26 =: Oberseite v. 22
- 28 =: Oberseite v. 24
- 30 =: zylindrische Wandung
- 32 =: Gehäuse
- 34 =: Eingangsteil
- 36 =: Ausgangsteil
- 37 =: Ringschürze
- 38 =: Zylinderabschnitt
- 39 =: Schmelz-Zone
- 40 =: weiblicher Luer-Lock-Anschluß
- 41 =: männlicher Luer-Lock-Anschluß

## Patentansprüche

1. Kombinationsfilter-Anordnung (1) mit einer Anzahl von in Strömungsrichtung hintereinander und parallel zueinander angeordneten Filtersieben (2), wobei die Filtersiebe (2) unter Bildung von Filterelementen (4) in Gehäuseelementen (6) gespannt befestigt sind, und die Gehäuseelemente (6) mittels oberer und unterer Lagerflächen (8, 10) aneinander anliegend in einem Stapel (12) zusammengehalten sind, und wobei die Filterelemente (4) zylindrisch mit kreisförmigen Lagerflächen (8, 10) ausgebildet sind, und wobei ferner die Filterelemente (4) als koaxiale Säule in einem Gehäuse (32) eingeschlossen sind, **dadurch gekennzeichnet, dass** jedes Filterelement (4) auf seiner oberen bzw. unteren Lagerfläche (8 bzw. 10) eine zentrierende männliche Kupplungs- und Dichtformation (14) und auf der gegenüberliegenden unteren bzw. oberen Lagerfläche (10 bzw. 8) eine entsprechende weibliche zentrierende Kupplungs- und Dichtformation (16) aufweist, und dass die männliche Kupplungs- und Dichtformation (14) aus einem ringförmigen Vorsprung (18) auf der oberen Lagerfläche (8) und die weibliche Kupplungs- und Dichtformation (16) aus einer entsprechenden ringförmigen Ausnehmung (20) in der unteren Lagerfläche (10) besteht.

2. Kombinationsfilter-Anordnung nach Anspruch 1, **dadurch gekennzeichnet, dass** der ringförmige Vorsprung (18) und die ringförmige Ausnehmung (20) jeweils einen V-förmigen Querschnitt aufweisen.

3. Kombinationsfilter-Anordnung nach Anspruch 1 oder 2, **dadurch gekennzeichnet, dass** die obere Lagerfläche (8) eine ringförmig abgesenkte Stufe (22) aufweist, dass die untere Lagerfläche (10) eine ringförmige, in die Stufe (22) passende Nabe (24) aufweist, wobei die Passung zwischen dem Außendurchmesser der Nabe (24) und dem Innendurchmesser der Stufe (22) ein leichter Preßsitz ist, dass die männliche Kupplungs- und Dichtformation (14) auf der Oberseite (26) der Stufe (22) und die weibliche Kupplungs- und Dichtformation (16) auf der entsprechenden Oberseite (28) der Nabe (24) angeordnet sind, und dass die Höhe der Nabe (24) größer ist als die Strecke, um welche die Stufe (22) in der oberen Lagerfläche (8) abgesenkt ist.

4. Kombinationsfilter-Anordnung nach einem der vorstehenden Ansprüche, **dadurch gekennzeichnet, dass** das Filtersieb (2) in dem dazugehörigen Gehäuseelement (6) über den ringförmigen Vorsprung (18) gelegt ist und teilweise die die Stufe (22) umgebende zylindrische Wandung (30) bedeckt.

5. Kombinationsfilter-Anordnung nach einem der vorstehenden Ansprüche, **dadurch gekennzeichnet, dass** die Kombinationsfilter-Anordnung (1) zwei bis fünf Filterelemente (4) enthält.

6. Kombinationsfilter-Anordnung nach einem der vorstehenden Ansprüche, **dadurch gekennzeichnet, dass** die Filterelemente (4) unter axialer Vorspannung in dem Gehäuse (32) gehalten sind, und dass das Gehäuse (32) aus einem Eingangsteil (34) und einem Ausgangsteil (36) besteht, welche axial zusammenfügbar sind, wobei der Eingangsteil (34) mit einer weiblichen Kupplungs- und Dichtformation (16) und der Ausgangsteil (36) mit einer männlichen Kupplungs- und Dichtformation (14) versehen ist.

7. Kombinationsfilter-Anordnung nach Anspruch 6, **dadurch gekennzeichnet, dass** der Eingangsteil (34) unter Vorspannung der Säule aus Filterelementen (4) mit dem Ausgangsteil (36) durch Ultraschallschweißen oder Kleben verbunden ist.

8. Kombinationsfilter-Anordnung nach Anspruch 6, **dadurch gekennzeichnet, dass** der Eingangsteil (34) unter Vorspannung der Säule aus Filterelementen (4) mit dem Ausgangsteil (36) durch einen durch Umspritzen der beiden Teile (34, 36) hergestellten Zylinderabschnitt (38) verbunden ist.

9. Kombinationsfilter-Anordnung nach Anspruch 8, **dadurch gekennzeichnet, dass** der Zylinderabschnitt (38) aus einem Kunststoff besteht, welcher zur Herstellung der Vorspannung nach dem Umspritzen schrumpft.

10. Kombinationsfilter-Anordnung nach Anspruch 8 oder 9, **dadurch gekennzeichnet, dass** die Wandstärke der Gehäuseelemente (6) derart ist, dass deren Material beim Umspritzen mit dem Material des Zylinderabschnitts (38) verschmilzt.

11. Kombinationsfilter-Anordnung nach einem der vorstehenden Ansprüche, **dadurch gekennzeichnet, dass** die Filterelemente (4) eines Stapels sämtlich die gleiche Siebweite aufweisen.

12. Kombinationsfilter-Anordnung nach einem der Ansprüche 1 bis 10, **dadurch gekennzeichnet, dass** die Filterelemente (4) eines Stapels unterschiedliche Siebweiten aufweisen und einen Tiefenfilter bilden.

13. Kombinationsfilter-Anordnung nach einem der vorstehenden Ansprüche, **dadurch gekennzeichnet, dass** das Eingangsteil (34) als weiblicher Luer-Lock-Anschluß (40) ausgebildet ist.

14. Kombinationsfilter-Anordnung nach einem der vorstehenden Ansprüche, **dadurch gekennzeichnet, dass** das Ausgangsteil (36) als männlicher Luer-Lock-Anschluß (41) ausgebildet ist.

15. Verfahren zum Herstellen einer Kombinationsfilter-Anordnung, bei welchem eine Anzahl von Filtersieben unter Bildung von Filterelementen in Gehäuseelementen gespannt befestigt werden und die Filtersiebe in Strömungsrichtung hintereinander und parallel zueinander angeordnet werden und die Gehäuseelemente an oberen und unteren Lagerflächen aneinander anliegend als Stapel in einem Gehäuse angeordnet werden, **dadurch gekennzeichnet, dass** jedes Filterelement auf einer seiner Lagerflächen mit einer zentrierenden männlichen Kupplungs- und Dichtformation und auf seiner gegenüberliegenden Lagerfläche mit einer zentrierenden weiblichen Kupplungs- und Dichtformation versehen wird, dass die Filterelemente mit ineinander eingreifenden männlichen und weiblichen Dichtformationen zu einer Säule gestapelt zwischen einem Eingangs- und Ausgangsteil angeordnet und axial zusammengedrückt werden, und dass in diesem Zustand der Eingangsteil mit dem Ausgangsteil verbunden wird.

16. Verfahren nach Anspruch 15, **dadurch gekennzeichnet, dass** der Eingangsteil mit dem Ausgangsteil über einen Gehäuseabschnitt durch Ultraschallschweissen oder Kleben verbunden wird.

17. Verfahren nach Anspruch 15, **dadurch gekennzeichnet, dass** der Eingangsteil mit dem Ausgangsteil durch Umspritzen verbunden wird.

18. Verfahren nach Anspruch 17, **dadurch gekennzeichnet, dass** die Säule von Filterelementen zwischen dem Eingangsteil und dem Ausgangsteil unter Vorspannung angeordnet wird, dass der Eingangsteil mit dem Ausgangsteil über einen durch Umspritzen geformten Zylinderabschnitt verbunden wird, und dass die Wandstärken und/oder die Spritztemperatur derart gewählt werden, dass das Material des Zylinderabschnitts mit dem Material der Filterelemente bzw. deren Gehäuseelemente verschmilzt.

## Claims

1. Combination filter assembly (1) having a number of filter sieves (2), which in parallel to each other are positioned one after the other in the direction of flow, wherein the filter sieves (2) forming filter elements (4) are stretched in housing elements (6) and are mounted therein, wherein the housing elements (6) by means of top and bottom bearing faces (8, 10) contacting each other are maintained in a stack (12) and, wherein the filter elements (4) are having a cylindrical shape with annular bearing faces (8, 10) and, wherein further the filter elements (4) are enclosed in a housing (32) as a co-axial column, **characterized in that** each filter element (4) on its top or bottom bearing face (8 or 10) is having a centering male coupling and sealing formation (14) and is having on the opposite bottom or top bearing face (10 or 8) a corresponding centering female coupling and sealing formation (16) and, that the male coupling and sealing formation (14) is consisting of an annular protrusion (18) on the top bearing face (8) and, **in that** the female coupling and sealing formation (16) is consisting of a corresponding annular groove (20) in the bottom bearing face (10).

2. Combination filter assembly according to claim 1, **characterized in that** the annular protrusion (18) and the annular groove (20) each are having a V-shaped cross-section.

3. Combination filter assembly according claim 1 or 2, **characterized in that** the top bearing face (8) is having an annular lowered step (22), that the bottom bearing face (10) is having an annular boss (24) fitting into said step (22), wherein the fit between the exterior diameter of the boss (24) and the interior diameter of the step (22) is a slight press-fit, that the male coupling and sealing formation (14) is positioned on the top (26) of the step (22) and the female coupling and sealing formation (16) are positioned on the corresponding top (28) of the boss (24) and, that the height of the boss (24) is larger than the distance by which the step (22) is lowered with respect to the top bearing face (8).

4. Combination filter assembly according to any of the preceding claims, **characterized in that** the filter sieve (2) is positioned over the annular protrusion (18) in the corresponding housing element (6) and partly is covering the cylindrical wall (30) surrounding the step (22).

5. Combination filter assembly according to any of the preceding claims, **characterized in that** the combination filter assembly (1) is containing two to five filter elements (4).

6. Combination filter assembly according to any of the preceding claims, **characterized in that** the filter elements (4) are mounted in the housing (32) with an axial load and, that the housing (32) is consisting of an entry section (34) and an exit section (36), which are mountable to each other in an axial relation, wherein the entry section (34) is having a female coupling and sealing formation (16) and the exit section (36) is having a male coupling and sealing formation (14) .

7. Combination filter assembly according to claim 6, **characterized in that** the entry section (34) is connected with the exit section (36) while maintaining the load of the column of filter elements (4) by ultrasonic welding or adhesion.

8. Combination filter assembly according to claim 6, **characterized in that** the entry section (34) is connected with the exit section (36) while maintaining the load in the column of filter elements (4) by a cylinder section (38) produced by overmoulding of the two sections (34, 36).

9. Combination filter assembly according to claim 8, **characterized in that** the cylinder section (38) is consisting of an artificial resin, which for producing the load is shrinking after the overmoulding.

10. Combination filter assembly according to claim 8 or 9, **characterized in that** the wall thickness of the housing elements (6) is such that the material thereof is melting together with the material of the cylinder section (38) during the overmoulding.

11. Combination filter assembly according to any of the preceding claims, **characterized in that** the filter elements (4) of the stack are having the same pore size.

12. Combination filter assembly according to any of the claims 1 to 11, **characterized in that** the filter elements (4) of a stack are having different pore sizes and are forming a depth filter.

13. Combination filter assembly according to any of the preceding claims, **characterized in that** the entry section (34) is performed as a female Luer-Lock connector (40).

14. Combination filter assembly according to any of the preceding claims, **characterized in that** the exit section (36) is performed as a male Luer-Lock connector (41).

15. Method for producing a combination filter assembly, in which a number of filter sieves are stretched and mounted in housing elements, thereby forming filter elements and in which the filter sieves are positioned in parallel one after the other in the direction of flow with the housing elements being positioned by means of top and bottom bearing faces contacting each other as a stack in a housing, **characterized in that** each filter element is provided with a centering male coupling and sealing formation on one of its bearing faces and is provided on its opposite bearing face with a centering female coupling and sealing formation, **in that** the filter elements with interengaging male and female sealing formations are stacked in a column and are positioned between an entry section and an exit section and axially are compressed and, **in that** in this state the entry section is connected with the exit section.

16. A method according to claim 15, **characterized in that** the entry section is connected with the exit section via a housing section by means of ultrasonic welding or adhesion.

17. A method according to claim 15, **characterized in that** the entry section is connected with the exit section by overmoulding.

18. A method according to claim 17, **characterized in that** the column of filter elements is positioned between the entry section and the exit section under pretension, **in that** the entry section is connected with the exit section by means of a cylindrical section formed by overmoulding and, **in that** the wall thicknesses and/or the injection molding temperature is chosen such that the material of the cylinder section is melting together with the material of the filter elements or of their housing elements, respectively.

## Revendications

1. Dispositif à filtres combinés (1) comportant un nombre de tamis filtrants (2) disposés l'un derrière l'autre dans la direction d'écoulement et parallèlement les uns aux autres, les tamis filtrants (2) étant fixés serrés en formant des éléments filtrants (4) dans des éléments de boîtier (6), et les éléments de boîtier (6) étant maintenus ensemble appliqués les uns contre les autres en une pile (12), au moyen de surfaces de support supérieures et inférieures (8, 10) et les éléments filtrants (4) étant réalisés cylindriques avec des surfaces de support (8, 10) de forme circulaire, et les éléments filtrants (4) étant enfermés en outre sous la forme d'une colonne coaxiale dans un boîtier (32), **caractérisé en ce que** chaque élément filtrant (4) présente sur sa surface de support supérieure ou inférieure (8 ou 10) une formation mâle d'accouplement et d'étanchéité (14) de centrage et sur la surface de support inférieure ou supérieure (10 ou 8) opposée, une formation femelle d'accouplement et d'étanchéité (16) de centrage, et **en ce que** la formation mâle d'accouplement et d'étanchéité (14) est constituée d'une saillie (18) de forme annulaire sur la surface de support supérieure (8) et la formation femelle d'accouplement et d'étanchéité (16) d'un évidement (20) de forme annulaire correspondante dans la surface de support inférieure (10).

2. Dispositif à filtres combinés selon la revendication 1, **caractérisé en ce que** la saillie (18) de forme annulaire et l'évidement (20) de forme annulaire présentent chacun une section transversale en V.

3. Dispositif à filtres combinés selon la revendication 1 ou 2, **caractérisé en ce que** la surface de support supérieure (8) présente un gradin (22) encastré de forme annulaire, **en ce que** la surface de support inférieure (10) présente un moyeu (24) de forme annulaire s'adaptant dans le gradin (22), l'ajustement entre le diamètre extérieur du moyeu (24) et le diamètre extérieur du gradin (22) étant un léger ajustement pressé, **en ce que** la formation mâle d'accouplement et d'étanchéité (14) est disposée sur la face supérieure (26) du gradin (22) et la formation femelle d'accouplement et d'étanchéité (16) sur la face supérieure (28) correspondante du moyeu (24) et **en ce que** la hauteur du moyeu (24) est supérieure à la distance sur laquelle le gradin (22) est encastré dans la surface de support supérieure (8).

4. Dispositif à filtres combinés selon l'une des revendications précédentes, **caractérisé en ce que** le tamis filtrant (2) est placé dans l'élément de boîtier (6) correspondant au-dessus de la saillie (18) de forme annulaire et recouvre en partie la paroi (30) cylindrique entourant le gradin (22).

5. Dispositif à filtres combinés selon l'une des revendications précédentes, **caractérisé en ce que** le dispositif à filtres combinés (1) contient deux à cinq éléments filtrants (4).

6. Dispositif à filtres combinés selon l'une des revendications précédentes, **caractérisé en ce que** les éléments filtrants (4) sont maintenus dans le boîtier (32) avec précontrainte axiale, et **en ce que** le boîtier (32) est constitué d'une partie d'entrée (34) et d'une partie de sortie (36) qui peuvent être assemblées axialement, la partie d'entrée (34) étant pourvue d'une formation femelle d'accouplement et d'étanchéité (16) et la partie de sortie (36) d'une formation mâle d'accouplement et d'étanchéité (14).

7. Dispositif à filtres combinés selon la revendication 6, **caractérisé en ce que** la partie d'entrée (34) est reliée avec précontrainte de la colonne d'éléments filtrants (4), à la partie de sortie (36), par soudage aux ultrasons ou collage.

8. Dispositif à filtres combinés selon la revendication 6, **caractérisé en ce que** la partie d'entrée (34) est reliée avec précontrainte de la colonne d'éléments filtrants (4), à la partie de sortie (36), par un tronçon de cylindre (38) réalisé par enrobage par injection des deux parties (34, 36) .

9. Dispositif à filtres combinés selon la revendication 6, **caractérisé en ce que** le tronçon de cylindre (38) est constitué d'une matière plastique qui se rétracte après l'enrobage par injection, pour réaliser la précontrainte.

10. Dispositif à filtres combinés selon la revendication 8 ou 9, **caractérisé en ce que** l'épaisseur de la paroi des éléments de boîtier (6) est telle que leur matériau fond lors de l'enrobage par injection avec le matériau du tronçon de cylindre (38).

11. Dispositif à filtres combinés selon l'une des revendications précédentes, **caractérisé en ce que** les éléments filtrants (4) d'une pile présentent tous la même ouverture de tamis.

12. Dispositif à filtres combinés selon l'une des revendications 1 à 10, **caractérisé en ce que** les éléments filtrants (4) d'une pile présentent des ouvertures de tamis différentes et forment un filtre à lit profond.

13. Dispositif à filtres combinés selon l'une des revendications précédentes, **caractérisé en ce que** la partie d'entrée (34) est réalisée comme un raccord luer-lock femelle (40).

14. Dispositif à filtres combinés selon l'une des revendications précédentes, **caractérisé en ce que** la partie de sortie (36) est réalisée comme raccord luer-lock mâle (41).

15. Procédé de fabrication d'un dispositif à filtres combinés, dans lequel un nombre de tamis filtrants est fixé serré dans des éléments de boîtier enfermant des éléments filtrants, et les tamis filtrants sont disposés les uns derrière les autres dans le sens d'écoulement et parallèlement les uns aux autres et les éléments de boîtier sont disposés en pile dans un boîtier en s'appliquant les uns contre les autres sur des surfaces de support supérieures et inférieures, **caractérisé en ce que** chaque élément filtrant est pourvu sur l'une de ses surfaces de support d'une formation mâle d'accouplement et d'étanchéité de centrage et sur sa surface de support opposée, d'une formation femelle d'accouplement et d'étanchéité de centrage, **en ce que** les éléments filtrants sont disposés entre une partie d'entrée et une partie de sortie, empilés en une colonne avec des formations d'étanchéité mâles et femelles s'engageant les unes dans les autres, et sont comprimés axialement, et **en ce que** dans cet état, la partie d'entrée est reliée à la partie de sortie.

16. Procédé selon la revendication 15, **caractérisé en ce que** la partie d'entrée est reliée à la partie de sortie par un tronçon de boîtier, par soudage aux ultrasons ou collage.

17. Procédé selon la revendication 15, **caractérisé en ce que** la partie d'entrée est reliée à la partie de sortie par enrobage par injection.

18. Procédé selon la revendication 17, **caractérisé en ce que** la colonne d'éléments filtrants est disposée avec précontrainte entre la partie d'entrée et la partie de sortie, **en ce que** la partie d'entrée est reliée à la partie de sortie par un tronçon de cylindre formé par enrobage par injection, et **en ce que** les épaisseurs de la paroi et/ou la température d'injection sont choisies de manière que le matériau du tronçon de cylindre fonde avec le matériau des éléments filtrants ou de leurs éléments de boîtier.
